# FASCICULE DE BREVET EUROPEEN

(11) **EP 1 062 489 B1**
(45) Date de publication et mention de la délivrance du brevet: **17.07.2002**
(21) Numéro de dépôt: 99937983.7
(22) Date de dépôt: 03.03.1999
(51) Int. Cl.: G01L 19/00

(54) **PROCEDE ET DISPOSITIF DE MESURE DE PRESSION A L'INTERIEUR D'UN GENERATEUR DE VAPEUR**
VORRICHTUNG UND VERFAHREN ZUR DRUCKMESSUNG IM INNERN EINES DAMPFERZEUGERS
METHOD AND DEVICE FOR MEASURING PRESSURE INSIDE A STEAM GENERATOR

(30) Priorité: 04.03.1998 FR 9802623
(43) Date de publication de la demande: 27.12.2000
(73) Titulaire: ELECTRICITE DE FRANCE, 75008 Paris (FR); M.I.R.R., 07290 Quintenas (FR)
(72) Inventeur: EMIN, Michel, F-69130 Ecully (FR)
(74) Mandataire: Des Termes, Monique
(86) Numéro de dépôt international: FR9900478
(87) Numéro de publication internationale: WO9945353

(56) Documents cités:
- FR-A- 2 422 154
- US-A- 2 024 003

## Description

### Domaine de l'invention

L'invention concerne la mesure de la pression à l'intérieur d'un générateur de vapeur utilisé dans une installation nucléaire de production d'électricité. Il s'agit, plus précisément, de contrôler le niveau d'eau dans le circuit secondaire au niveau du générateur de vapeur.

### Art antérieur et problème posé

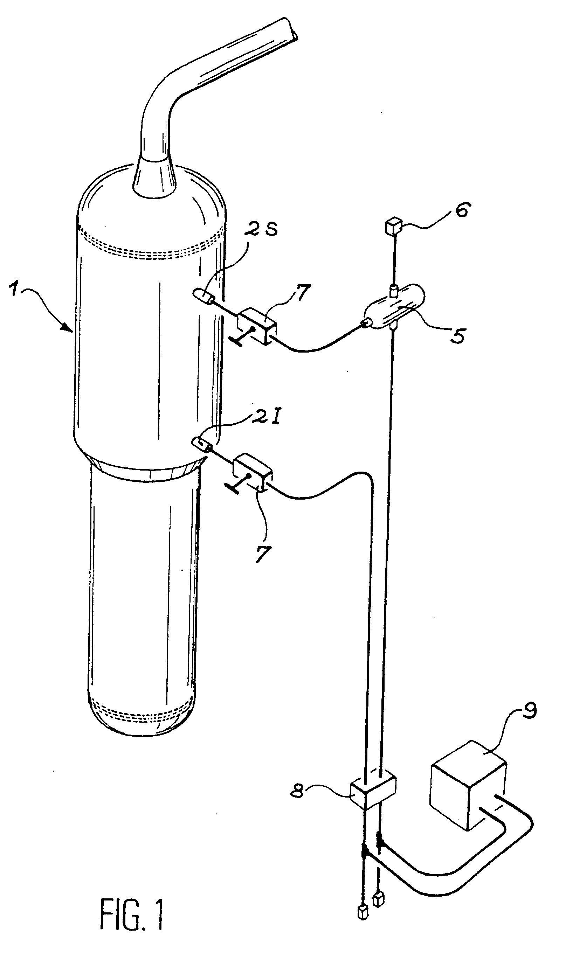

Dans les générateurs de vapeur, la mesure du niveau d'eau du circuit secondaire se fait par l'intermédiaire de plusieurs sondes ou dispositifs de mesure de pression de manière à effectuer des mesures de pression différentielle. En référence à la figure 1, deux sondes 2S et 2I sont représentées sur la paroi externe d'un générateur de vapeur 1, à des hauteurs différentes. La sonde inférieure 2I est placée juste au-dessus des cyclones du générateur, la sonde supérieure 2S étant placée quelques mètres au-dessus, à la verticale de la sonde inférieure 2I. Ce système de mesure de pression différentielle se complète d'une vanne 7 sur chaque voie de mesure, d'un pot de condensation 5 en aval de la sonde supérieure 2S surmonté d'un évent 6, d'une interface d'équilibrage 8 et d'un appareil de mesure 9.

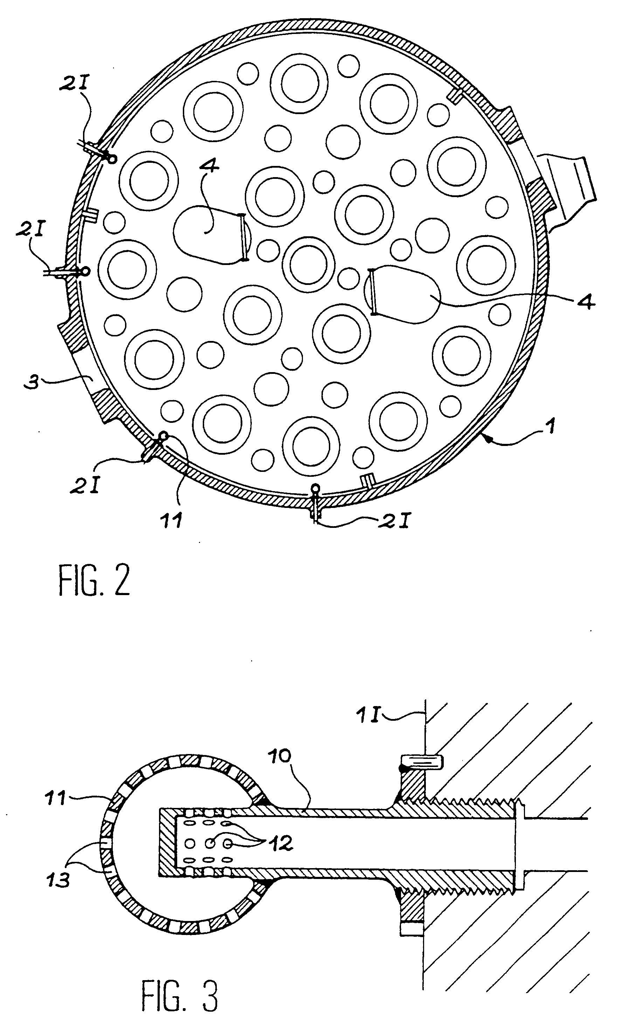

La figure 2 montre en coupe un générateur de vapeur au niveau de la sonde inférieure 2I de la figure 1. En fait, plusieurs sondes inférieures 2I sont utilisées. Elles débouchent à l'intérieur du générateur de vapeur 1. Elles sont recouvertes ou entourées d'un tranquilisateur 11 présentant une forme sphérique. Sur cette figure 2, ont été également représentés des trous d'homme 4 et les issues du circuit secondaire 3.

La figure 3 montre de façon plus précise, et en coupe, une sonde recouverte de son tranquilisateur. La sonde proprement dite est constituée principalement d'un tuyau capteur 10 fixé sur la paroi interne 1I du générateur de vapeur 1 et dont l'extrémité débouchant dans le générateur de vapeur 1 est recouverte du tranquilisateur 11 de forme sphérique. Le tuyau capteur 10 est fermé à son extrémité mais possède des trous latéraux de mesure 12 lui permettant de capter la pression à l'intérieur du générateur de vapeur. De même, le tranquilisateur 11 possède sur sa sphère des ouvertures 13 permettant au flux de vapeur de pénétrer à l'intérieur du tranquilisateur 11 pour pouvoir être accessible au tuyau capteur 10.

Ainsi, plusieurs sondes, ou dispositifs de mesure, de pression sont placées à l'intérieur du générateur de vapeur pour procéder au contrôle de la pression à l'intérieur de celui-ci en vue d'obtenir un fonctionnement optimal de ce dernier.

Or, à certains stades de puissance de fonctionnement du générateur de vapeur, en particulier à 35% et 100%, des phénomènes thermo-hydrauliques provoquent le bouchage des sondes inférieures ou basse pression 2I d'une installation de mesure de pression différentielle, en particulier lorsqu'elles possèdent un tranquilisateur tel que celui référencé 11 sur la figure 3. Ce bouchage est dû principalement au dépôt de magnétite se formant dans le circuit secondaire et entraînée par la vapeur. Celle-ci bouche les ouvertures 13 du tranquilisateur 11 et éventuellement les trous latéraux 12 du tuyau de mesure 10. Ce bouchage occasionne le remplissage du pot de condensation référencé 5 sur la figure 1, car il empêche ainsi l'évacuation du retour d'eau venant du pot de condensation, en aval du dispositif de mesure. Le poids de la colonne d'eau ainsi formée dans le dispositif de mesure se retrouve donc dans la colonne d'eau de la ligne basse pression du capteur de pression différentielle. Par conséquent, la mesure globale du niveau à l'intérieur du générateur de vapeur est faussée. Ceci a une forte incidence sur la sûreté de fonctionnement du générateur de vapeur et sur la bonne exploitation des tranches nucléaires.

On note que ces phénomènes de bouchage de tranquilisateurs sont particulièrement remarqués sur les tranquilisateurs les plus éloignés des cyclones où le vecteur vitesse du flux de vapeur a une orientation différente.

On explique également ce phénomène de bouchage par un équilibre entre l'énergie potentielle de la colonne d'eau augmentée d'une dépression dans le pot de condensation provenant de la condensation de la vapeur et à l'énergie cinétique de la vapeur. On précise que, des surpressions existent en dessous du tranquilisateur 11 de forme sphérique de la figure 3, et que des dépressions existent au-dessus. Elles sont dues au fort courant existant le long des parois où se trouvent les dispositifs de mesure. Les trous ou ouvertures 13 du tranquilisateur 11 peuvent donc se trouver trop petits et favoriser leur bouchage partiel. Comme le courant est alors relativement faible à l'intérieur de la sphère constituant le tranquilisateur 13, le tuyau de mesure 10 peut se trouver embourbé.

Le brevet FR-A-2 422 154 divulge aussi un dispositif de prise de mesure de pression statique dans une enceinte renfermant une phase vapeur.

On note que ce problème se pose depuis l'année 1979.

Le but de l'invention est donc de remédier à ces inconvénients en proposant un nouveau type de dispositif de mesure de pression destiné à réaliser la mesure de pression différentielle à l'intérieur des générateurs de vapeur existants.

### Résumé de l'invention

A cet effet, le premier objet principal de l'invention est un procédé de mesure de pression à l'intérieur d'un générateur de vapeur composé principalement de :
- un tuyau capteur débouchant dans le générateur de vapeur par une extrémité fermée, mais dotée de trous latéraux ;
- un tranquilisateur entourant l'extrémité du tuyau capteur pour affranchir les trous latéraux du tuyau capteur des effets dynamiques néfastes des courants de vapeur aux alentours ; et
- un pot de condensation sur le tuyau capteur,
le procédé consistant à restituer les condensats par le tuyau capteur.

Selon l'invention, le procédé consiste à dissocier la mesure de pression effectuée par les trous latéraux du tuyau capteur de la restitution des condensats par l'extrémité du tuyau capteur qui est percée à cet effet par des trous d'extrémité.

Dans la mise en oeuvre du procédé selon l'invention, il est préférable d'utiliser une chicane dans le tranquilisateur pour créer une chambre sans pression dynamique en regard des trous d'extrémité pour favoriser la vidange des condensats.

De préférence, on incline légèrement le tuyau capteur vers l'intérieur du générateur de vapeur pour favoriser l'évacuation des condensats.

Le deuxième objet principal de l'invention est un dispositif de mesure de pression à l'intérieur d'un générateur de vapeur composé de :
- un tuyau capteur débouchant dans le générateur de vapeur par une extrémité fermée mais dotée de trous latéraux ;
- un tranquilisateur entourant l'extrémité fermée de tuyau capteur et possédant des ouvertures, pour affranchir les trous latéraux du tuyau capteur des effets dynamiques néfastes des courants de vapeur aux alentours du tuyau capteur ; et
- un pot de condensation sur le tuyau capteur,
caractérisé en ce que, dans le tranquilisateur, sont prévus des moyens de séparation pour délimiter un canal de mesure à partir des trous latéraux du tuyau capteur et un canal de vidange à partir d'au moins un trou d'extrémité pratiqué à l'extrémité fermée du tuyau capteur.

De préférence, ces moyens de séparation sont constitués par une cloison de séparation à l'intérieur du tranquilisateur qui possède une forme sphérique, délimitant ainsi le canal de vidange par un espace de vidange et le canal de mesure par un espace de mesure.

Dans la réalisation préférentielle du dispositif selon l'invention, le canal de mesure débouche dans le générateur de vapeur par des trous de mesure pratiqués dans le plan horizontal médian de la partie du tranquilisateur correspondant au canal de mesure.

De préférence, il est intéressant d'utiliser une chicane dans le tranquilisateur, placée en regard du au moins un trou d'extrémité pratiqué dans l'extrémité du tuyau capteur pour créer une chambre sans pression dynamique dans le tranquilisateur.

Il est également préférable de pratiquer des trous de communication dans la partie inférieure de la cloison de séparation pour favoriser l'évacuation des condensats dans le canal de vidange.

Il est également intéressant, pour faciliter la vidange des condensats du pot de condensation, que le tuyau capteur soit légèrement incliné vers le bas de l'intérieur du générateur de vapeur.

Dans le but d'entretenir relativement facilement le dispositif, on prévoit qu'au moins un trou de mesure pratiqué dans le tranquilisateur soit placé en regard d'un trou latéral du tuyau capteur.

Le canal de vidange communique avec l'intérieur du générateur par les ouvertures qui sont constituées de lamages pratiqués dans la partie du tranquilisateur correspondant au canal de vidange.

On prévoit que des moyens de fixation du dispositif sur la paroi interne du générateur de vapeur soient constitués d'au moins une pièce magnétique pour piéger en partie les déchets évoluant aux alentours du dispositif.

### Liste des figures

L'invention et ses différentes caractéristiques techniques seront mieux comprises à la lecture de la description suivante accompagnée de plusieurs figures représentant respectivement :
- figure 1, le principe de la mesure de pression différentielle à l'intérieur du générateur de vapeur ;
- figure 2, en coupe, la section d'un générateur de vapeur au niveau duquel sont installées des dispositifs de mesure de la pression dans le générateur de vapeur ;
- figure 3, en coupe, un dispositif de mesure de pression selon l'art antérieur à l'intérieur d'un générateur de vapeur ;
- figure 4, une vue représentant une réalisation du dispositif de mesure selon l'invention ; et
- figure 5, en coupe, la réalisation principale d'un dispositif de mesure selon l'invention.

### Description détaillée d'une réalisation de l'invention

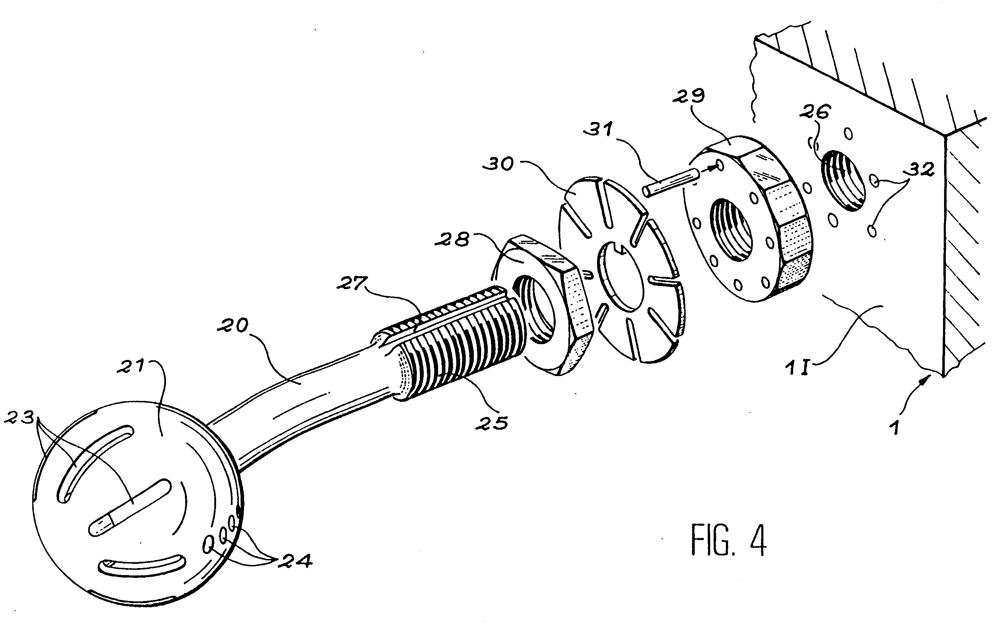

En référence à la figure 4, le dispositif de mesure de pression selon l'invention est constitué principalement également d'un tuyau capteur 20 et d'un tranquilisateur 21. Il est fixé à la paroi interne 1I du générateur de vapeur 1 par des moyens de fixation qui peuvent être constitués d'un filetage 25 pratiqué sur la paroi externe du tuyau capteur 20, complété d'une rainure 27 et se vissant à l'intérieur d'un trou taraudé 26 pratiqué sur la surface interne 1I du générateur de vapeur 1. Pour bloquer en rotation le dispositif de mesure selon l'invention dans la position optimale de fonctionnement, un écrou de fixation 28 et une bride 29 sont vissés sur le filetage 25. Une rondelle à ailettes 30 et un pion de centrage 31 complètent ces moyens de fixation pour positionner en rotation ces éléments. La rondelle à ailettes 30 est bloquée dans la rainure 27 et le pion de centrage 31 est introduit dans un trou de centrage 32 sur la paroi interne 1S du générateur de vapeur 1. On note qu'il est préférable d'utiliser une pièce de fixation, par exemple l'écrou de fixation 28, dans un matériau magnétique pour constituer un piège pour les déchets évoluant dans la vapeur, notamment la magnétite.

On s'aperçoit, sur cette figure 4, que le tuyau capteur 20 est légèrement incliné vers le bas, du côté du tranquilisateur 21. Ceci permet de favoriser l'écoulement des condensats de vapeur d'eau, issus du pot de condensation placé à l'extérieur du générateur de vapeur 1, et devant s'évacuer par les ouvertures 23 du tranquilisateur 21. L'inclinaison de cette partie d'extrémité du tuyau capteur 20 est de préférence de 7°, cette pente constituant une inclinaison de rendement maximal pour un écoulement tel que celui des condensats dans le tuyau capteur 20.

Les ouvertures 23 sont prévues sous la forme de lamages pratiqués sur l'avant de la sphère constituant le tranquilisateur 21.

Les trous de mesure 24 sont pratiqués dans le tranquilisateur 21, sur son plan médian horizontal. Ceci permet de ne pas prendre en compte d'éventuelles importantes différences de pression régnant juste au-dessus ou juste en dessous du tranquilisateur 21, mais au contraire de ne tenir compte que d'une pression moyenne régnant entre ces deux extrêmes.

On précise que les ouvertures en forme de lamages 23 défavorisent un éventuel bouchage quel qu'il soit, grâce à la grande superficie de ces ouvertures 23 et de leur forme allongée, et ceci quelle que soit la vitesse du flux de vapeur circulant aux alentours du tranquilisateur 21.

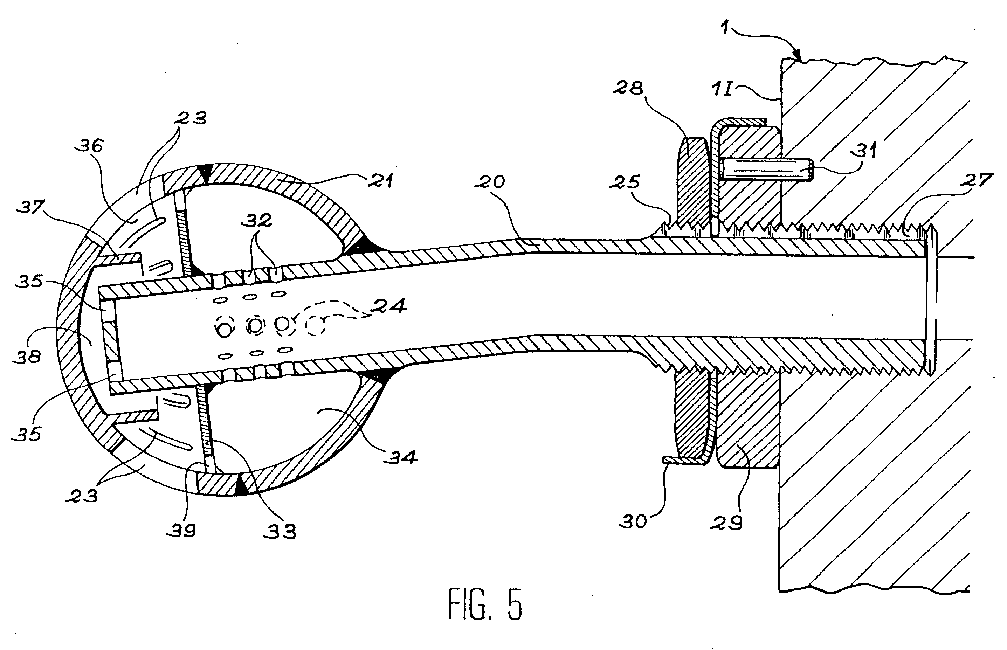

La figure 5 montre beaucoup mieux, et en détail, les différentes caractéristiques techniques du dispositif de mesure de pression selon l'invention. On retrouve sur cette figure 5 les pièces de fixation, à savoir le filetage 25 sur le tuyau capteur 20, l'écrou de fixation 28, la rondelle à ailettes 30, la bride de fixation 29 et le pion de centrage 31.

On peut voir, à l'intérieur du tranquilisateur 21, sur la paroi du tube capteur 20 des trous latéraux 32. Ceux-ci débouchent donc à l'intérieur de la sphère constituant le tranquilisateur 21. Une cloison de séparation 33 est installée à l'intérieur du tranquilisateur 21, de manière à ce que ces trous latéraux 32 débouchent dans une partie différente de celle où se trouvent les ouvertures 23 en forme de lamages sur le tranquilisateur 21. De la sorte, les trous latéraux et le tuyau capteur 20 constituent une première partie du canal de mesure qui se prolonge par un espace de mesure 34 délimité par la cloison de séparation 33. Ce canal de mesure se termine par les trous de mesure référencés 24 sur la figure 4 et se trouvant dans la sphère constituant le tranquilisateur 21, et débouchant dans le générateur de vapeur 1.

De cette manière, la cloison de séparation 33 délimite également le canal de vidange constitué par le tuyau capteur 20 qui possède à son extrémité au moins un trou d'extrémité 35 lui permettant de communiquer avec un espace de vidange 36 délimité, à l'intérieur du tranquilisateur 21 par la cloison de séparation 33. Le canal de vidange se termine donc par les lamages constituant les ouvertures 23 sur le tranquilisateur 21.

Le tranquilisateur 21 possède, dans son espace de vidange 36, en regard du, ou plutôt des deux trous d'extrémité 35, une chicane 37 qui constitue un obstacle important pour le flux de vapeur circulant verticalement dans le tranquilisateur 21 grâce aux ouvertures 23. Ainsi, la différence de pression régnant juste au-dessus et juste en dessous du tranquilisateur 21 n'a que très peu d'influence sur la pression régnant dans le tuyau capteur 20 grâce à cette chicane 37 qui permet en fait de constituer une chambre sans pression dynamique 38 placée en regard des trous d'extrémité 35.

Des trous de communication 39 dans la cloison de séparation 33 permettent également la vidange partielle d'une partie des condensats qui aurait tendance à ressortir du tuyau capteur 20 par les trous latéraux 32 se trouvant alors dans l'espace de mesure 34. Ces trous de communication 39 permettent alors à ces condensats de passer dans l'espace de vidange 36 et de s'échapper par les ouvertures 23 dans le générateur de vapeur.

En référence à la fois aux figures 4 et 5, il est préférable de faire en sorte que certains des trous de mesure 24 sur le tranquilisateur 21 soient placés en face des trous latéraux 32 sur le tuyau de mesure 20, pour qu'une intervention à l'aide d'outils de nettoyage puisse être possible à partir de l'extérieur du dispositif de mesure. On pense en particulier à une tige de fer qui pourrait être ainsi facilement introduite à la fois dans les trous de mesure 24 et les trous latéraux 32.

Il est prévu d'utiliser comme matériau de constitution de ce dispositif de mesure de pression un acier au chrome et au nickel, par exemple le 22 C N 17-22.

On signale que sur le parc des installations nucléaires de l'Electricité de France, le bouchage des sphères constituant des tranquilisateurs existant sur les sondes de mesure de pression différentielle impose une baisse de charge jusqu'à ce qu'on retrouve la cohérence entre les différentes sondes. On précise également que ce problème existe sur tous les générateurs de vapeur de toute tranche thermique ou nucléaire, et plus généralement sur toutes les chaudières à vapeur munies de mesure de niveau.

## Revendications

1. Procédé de mesure de pression à l'intérieur d'un générateur de vapeur au moyen d'un dispositif composé de :
- un tuyau capteur (20) débouchant dans le générateur de vapeur (1) par une extrémité dotée de trous latéraux (32) ;
- un tranquilisateur (21) entourant l'extrémité du tuyau capteur (20) pour affranchir les trous latéraux (32) des effets dynamiques néfastes dus aux courants de vapeur aux alentours du dispositifs de mesure ; et
- un pot de condensation connecté sur le tuyau capteur (20),
le procédé consistant à restituer les condensats dus au pot de condensation par le tuyau capteur (20),
**caractérisé en ce qu'**il consiste également à dissocier la mesure de pression effectuée par l'intermédiaire des trous latéraux (32) de la restitution des condensats par l'extrémité du tuyau capteur (20) en utilisant des trous d'extrémité frontaux (35) pratiqués dans une partie frontale de l'extrémité du tuyau capteur (20) pour restituer les condensats.

2. Procédé selon la revendication 1, **caractérisé en ce qu'**il consiste à incliner légèrement le tuyau capteur (20) vers l'intérieur du générateur de vapeur (1), pour favoriser l'évacuation des condensats.

3. Dispositif de mesure de pression à l'intérieur d'un générateur de vapeur (1), comprenant :
- un tuyau capteur (20) destiné à déboucher dans le générateur de vapeur (1) par une extrémité dotée de trous latéraux (32) pour effectuer la mesure ;
- un tranquilisateur (21) entourant l'extrémité du tuyau capteur (20) et ses trous latéraux (32) et possédant des ouvertures (23) pour affranchir les trous latéraux (32) du tuyau capteur (20) des effets dynamiques néfastes des courants de vapeur aux alentours du dispositif de mesure ; et
- un pot de condensation connecté sur le tuyau capteur (20) ;
**caractérisé en ce qu'**il comprend dans le tranquilisateur (21) une cloison de séparation (33) placée à l'intérieur du tranquilisateur (21), délimitant ainsi un canal de vidange à partir d'au moins un trou frontal d'extrémité (35) pratiqué dans la partie frontale de l'extrémité du tuyau capteur (20) et se prolongeant par une chambre de vidange (36), et un canal de mesure à partir des trous latéraux (32) du tuyau capteur (20) et se prolongeant par un espace de mesure (34).

4. Dispositif selon la revendication 3, **caractérisé en ce qu'**il consiste comprend une chicane (37) pour créer une chambre sans pression dynamique (38) placée en regard des trous d'extrémité frontaux (35) pour permettre la vidange des condensats.

5. Dispositif selon la revendication 3, **caractérisé en ce que** le canal de mesure débouche dans le générateur de vapeur (1) par des trous de mesure (24) pratiqués dans le plan médian de la partie du tranquilisateur (21) correspondant au canal de mesure.

6. Dispositif selon la revendication 3, **caractérisé en ce qu'**il comprend une chicane (37) placée à l'intérieur du tranquilisateur (21) et en regard du au moins un trou d'extrémité frontaux (35) pratiqué dans l'extrémité du tuyau capteur (20) pour créer une chambre sans pression dynamique (38) dans le tranquilisateur (21).

7. Dispositif selon la revendication 3, **caractérisé en ce qu'**il comprend, dans la partie inférieure de la cloison de séparation (33), pour favoriser l'évacuation des condensats par le canal de vidange, des trous de communication (39).

8. Dispositif selon la revendication 3, **caractérisé en ce que**, pour faciliter la vidange des condensats issus du pot de condensation, le tuyau capteur (20) est légèrement incliné.

9. Dispositif selon la revendication 3, **caractérisé en ce que**, dans le but d'entretenir relativement facilement le dispositif, au moins un trou de mesure (24) pratiqué dans le tranquilisateur (21) est placé en regard d'un trou latéral (32) du tuyau capteur (20).

10. Dispositif selon la revendication 3, **caractérisé en ce que** le canal de vidange communique avec l'intérieur du générateur de vapeur (1) par les ouvertures (23) qui sont constituées de lamages pratiqués dans la partie du tranquilisateur (21) correspondant avec le canal de vidange.

11. Dispositif selon la revendication 3, **caractérisé en ce qu'**il comprend des moyens de fixation sur la paroi interne (1I) du générateur de vapeur (1), constitués d'au moins une pièce magnétique pour piéger en partie les déchets évoluant aux alentours du dispositif.

12. Dispositif selon la revendication 4, **caractérisé en ce qu'**il comprend des moyens de fixation sur la paroi interne (1I) du générateur de vapeur (1), constitués d'au moins une pièce magnétique pour piéger en partie les déchets évoluant aux alentours du dispositif.

## Patentansprüche

1. Verfahren zur Druckmessung im Innern eines Dampferzeugers mittels einer Vorrichtung, gebildet durch:
- ein Fühlerrohr (20), das mit einem mit seitlichen Löchern (32) versehenen Ende in dem Dampferzeuger (1) mündet;
- einen Beruhiger (21), der das Ende des Fühlerrohrs (20) umgibt, um die seitlichen Löcher (32) vor den störenden dynamischen Effekten zu schützen, die durch Dampfströme in der Umgebung der Messvorrichtung verursacht werden; und
- einen mit dem Fühlerrohr (20) verbundenen Kondensationstopf,
wobei das Verfahren dem Zweck dient, die Kondensate aus dem Kondensationstopf durch das Fühlerrohr (20) zurückzuleiten,
**dadurch gekennzeichnet,**
**dass** es auch dazu dient, die mittels der seitlichen Löcher (32) durchgeführte Druckmessung zu trennen von der Rückleitung des Kondensats durch das Ende des Fühlerrohrs (20), indem man, um das Kondensat zurückzuleiten, frontale Endlöcher (35) benutzt, die in einem frontalen Teil des Endes des Fühlerrohrs (20) vorgesehen sind.

2. Verfahren nach Anspruch 1, **dadurch gekennzeichnet, dass** es darin besteht, das Fühlerrohr (20) leicht in Richtung Dampferzeuger-Innenseite (1) zu neigen, um die Entleerung der Kondensate zu begünstigen.

3. Vorrichtung zur Druckmessung im Innem eines Dampferzeugers (1), umfassend:
- ein Fühlerrohr (20), in dem Dampferzeuger (1) mit einem Ende mündend, das mit seitlichen Löchem (32) versehen ist, um die Messung durchzuführen;
- einen Beruhiger (21), der das Ende des Fühlerrohrs (20) und seine seitlichen Löcher (32) umgibt und Öffnungen (23) besitzt, um die seitlichen Löcher (32) des Fühlerrohrs (20) vor den störenden dynamischen Effekten der Dampfströme in der Umgebung der Messvorrichtung zu schützen; und
- einen Kondensationstopf, verbunden mit dem Fühlerrohr (20);
**dadurch gekennzeichnet, dass** sie eine Trennwand (33) umfasst, vorgesehen im Innem des Beruhigers (21), die einen Entleerungskanal, der bei wenigstens einem frontalen Endloch (35) beginnt, das in den frontalen Teil des Endes des Fühlerrohrs (20) vorgesehen ist, und sich durch eine Entleerungskammer (36) verlängert, von einem Messkanal trennt, der bei den seitlichen Löchern (32) des Fühlerrohrs (20) beginnt und sich durch einen Messraum (34) verlängert.

4. Vorrichtung nach Anspruch 3, **dadurch gekennzeichnet, dass** sie eine Schikane (37) umfasst, um eine Kammer ohne dynamischen Druck (38) zu schaffen, die den frontalen Endlöchern (35) gegenübersteht, um die Entleerung des Kondensats zu ermöglichen.

5. Vorrichtung nach Anspruch 3, **dadurch gekennzeichnet, dass** der Messkanal in dem Dampferzeuger (1) durch Messlöcher (24) mündet, die in der Mittelebene des Teils des Beruhigers vorgesehen sind, der dem Messkanal entspricht.

6. Vorrichtung nach Anspnrch 3, **dadurch gekennzeichnet, dass** sie eine Schikane (37) umfasst, die im Innem des Beruhigers (21) vorgesehen ist und wenigstens einem frontalen Endloch (35) gegenübersteht, vorgesehen in dem Ende des Fühlerrohrs (20), um im Beruhiger (21) eine Kammer (38) ohne dynamischen Druck zu schaffen.

7. Vorrichtung nach Anspruch 3, **dadurch gekennzeichnet, dass** sie in dem unteren Teil der Trennwand (33) Verbindungslöcher (39) aufweist, um die Entleerung des Kondensats durch den Entleerungskanal zu begünstigen.

8. Vorrichtung nach Anspruch 3, **dadurch gekennzeichnet, dass** das Fühlerrohr (20) leicht geneigt ist, um die Entleerung des aus dem Kondensationstopf kommenden Kondensats zu erleichtern.

9. Vorrichtung nach Anspruch 3, **dadurch gekennzeichnet, dass**, um die Vorrichtung relativ einfach unterhalten bzw. warten zu können, wenigstens ein in dem Beruhiger (21) vorgesehenes Messloch (24) einem seitlichen Loch (32) des Fühlerrohrs (20) gegenübersteht.

10. Vorrichtung nach Anspruch 3, **dadurch gekennzeichnet, dass** der Entleerungskanal mit dem Innern des Dampferzeugers (1) durch die öffnungen (23) kommuniziert, die durch Senkungen gebildet werden, die in dem Teil des Beruhigers (21) vorgesehen sind, der dem Entleerungskanal entspricht.

11. Vorrichtung nach Anspruch 3, **dadurch gekennzeichnet, dass** sie an der Innenwand (11) des Dampferzeugers (1) Einrichtungen zum Festmachen bzw. Festhalten umfasst, gebildet durch wenigstens ein magnetisches Teil, um teilweise die Abfälle einzufangen, die sich in der Umgebung der Vorrichtung bewegen.

12. Vorrichtung nach Anspruch 4, **dadurch gekennzeichnet, dass** sie an der Innenwand (11) des Dampferzeugers (1) Einrichtungen zum Festmachen bzw. Festhalten umfasst, gebildet durch wenigstens ein magnetisches Teil, um teilweise die Abfälle einzufangen, die sich in der Umgebung der Vorrichtung bewegen.

## Claims

1. Method for measuring pressure inside a steam generator by means of a device comprising:
- a sensor tube (20) leading into the steam generator (1) via an end part provided with side holes (32);
- a tranquilliser (21) surrounding the end part of sensor tube (20) to free the side holes (32) of harmful dynamic effects due to steam currents in the vicinity of the measuring device; and
- a condensation pipe connected to the sensor tube (20),
the method consisting of returning the condensates due to the condensation pipe via the sensor tube (20), **characterized in that** it also consists of separating the pressure measurement made by means of side holes (32) from the return of the condensates via the end part of the sensor tube (20) using front end holes (35) made in a front part of the end of the sensor tube (20) to return the condensates.

2. Method according to claim 1, **characterized in that** it consists of slightly tilting the sensor tube (20) towards the inside of the steam generator (1), to promote the evacuation of condensates.

3. Device for measuring pressure inside a steam generator (1), comprising:
- a sensor tube (20) leading into the steam generator (1) via an end part provided with side holes (32) for performing the measurement;
- a tranquilliser (21) surrounding the end part of sensor tube (20) and its side holes (32) and having openings (23) to free the side hales (32) of sensor tube (20) from the harmful dynamic effects of steam currents in the vicinity of the measuring device; and
- a condensation pipe connected to the sensor tube (20);
**characterized in that**, in tranquilliser (21), it comprises a separating partition (33) placed within said tranquilliser (21), thus defining an emptying channel from at least one front end hole (35) made in the front part of the end of the sensor tube (20) and extended by an emptying chamber (36), as well as a measuring channel from the side holes (32) of the sensor tube (20) and extended by a measuring space (34).

4. Device according to claim 3, **characterized in that** it comprises a deflector (37) for creating a chamber (38) without dynamic pressure placed facing the front end holes (35) in order to permit condensate emptying.

5. Device according to claim 3, **characterized in that** the measuring channel issues into the steam generator (1) by measuring holes (24) made in the median plane of the part of the tranquilliser (21) corresponding to the measuring channel.

6. Device according to claim 3, **characterized in that** it comprises a deflector (37) placed within the tranquilliser (21) and facing at least one front end hole (35) made in the end of the sensor tube (20) to create a chamber (38) without dynamic pressure in said tranquilliser (21).

7. Device according to claim 3, **characterized in that** in the lower part of the separating tube (33) it has communication holes (39) to aid the evacuation of condensates by the emptying channel.

8. Device according to claim 3, **characterized in that** the sensor tube (20) is slightly inclined to facilitate the emptying of the condensates from the condensation pipe.

9. Device according to claim 3, **characterized in that** with a view to relatively easily maintaining the device, at least one measuring hole (24) in the tranquilliser (21) faces a side hole (32) of the sensor tube (20).

10. Device according to claim 3, **characterized in that** the emptying channel communicates with the interior of the steam generator (1) by openings (23) constituted by slats made in the part of the tranquilliser (21) corresponding to the emptying channel.

11. Device according to claim 3, **characterized in that** it comprises fixing means on the inner wall (11) of the steam generator (1) constituted by at least one magnetic part for partly trapping the waste circulating in the vicinity of the device.

12. Device according to claim 4, **characterized in that** it comprises fixing means on the inner wall (1I) of the steam generator (1) constituted by at least one magnetic part for partly trapping the waste circulating in the vicinity of the device.
